# EUROPÄISCHE PATENTANMELDUNG

(11) **EP 1 002 771 A2**
(43) Veröffentlichungstag der Anmeldung: **24.05.2000**
(21) Anmeldenummer: 99890362.9
(22) Anmeldetag: 12.11.1999
(51) Int. Cl.: C03B 35/18

(54) **Rolle für Transport von erhitzten Glasscheiben**

(30) Priorität: 19.11.1998 AT 193298
(71) Anmelder: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(57) **Zusammenfassung**

Eine Rolle für den Transport von beispielsweise auf eine Temperatur von 600°C erhitzten Glasscheiben besitzt einen Laufring (2), der wenigstens in seinem radial äußeren, die Lauffläche 11 bildenden Bereich aus Quarzglas besteht. Der Laufring (2) ist zwischen zwei Scheiben (3) unter Zwischenlage von Isoliereinlagen (4) eingespannt. Über die Scheiben (3) ist die Rolle (1) auf einer Antriebswelle oder einer Lagerachse gelagert. Dadurch, daß der mit der erhitzten Glasscheibe in Berührung kommende Bereich (11) des Laufringes (2) aus Quarzglas besteht, sind thermische Spannungen in der transportierten Glasscheibe hintangehalten und es besteht keine Gefahr, daß die Glasscheibe an der Rolle (1) "klebt".

## Beschreibung

Die Erfindung betrifft eine Rolle für den Transport von erhitzten Glasscheiben mit den Merkmalen des einleitenden Teils von Anspruch 1.

Beim Transport von erhitzten Glasscheiben, die eine Temperatur von etwa 600°C haben können, ergeben sich erhebliche Probleme, wenn diese vertikal stehend transportiert werden sollen.

Bekannte Transportrollen aus Kunststoff sind zu wenig hitzebeständig. Rollen aus Metall sind für den Transport erhitzter Glasscheiben unvorteilhaft, weil sie wegen der guten Wärmeleiteigenschaft von Metall der erhitzten Glasscheibe punktuell schnell Wärme entziehen, so daß in der Glasscheibe thermische Spannungen entstehen, die dazu führen, daß in der Glasscheibe Sprünge entstehen können.

Es ist auch schon vorgeschlagen worden, Rollen für den Transport von erhitzten Glasscheiben aus Glas herzustellen oder mit einer Auflage aus Glaswolle zu versehen. Dieser Vorschlag ist ebenfalls nicht brauchbar, da Glaswolleauflagen von Transportrollen unter der Einwirkung der auf ihnen abrollenden Glasscheiben zerschnitten werden, so daß diese nur eine kurze Lebensdauer haben. Im übrigen sind mit Glasfasern oder -wolle belegte Rollen ebenso wie Transportrollen aus gewöhnlichem Glas nachteilig, weil auf höhere Temperaturen, beispielsweise auf 600°C, erhitztes Glas dazu neigt, an den Glasrollen oder an Glaswolleauflagen von Transportrollen anzukleben.

Der Erfindung liegt die Aufgabe zugrunde, eine Rolle der eingangs genannten Gattung anzugeben, mit welcher auch auf eine Temperatur von etwa 600°C erhitzte Glasscheiben problemlos und ohne nachteilige thermische Belastung der Glasscheiben transportiert werden können.

Gelöst wird diese Aufgabe mit einer Rolle, welche die Merkmale des Anspruches 1 aufweist.

Bevorzugte und vorteilhafte Ausgestaltungen der erfindungsgemäßen Rolle sind Gegenstand der Unteransprüche.

Dadurch, daß die Lauffläche der erfindungsgemäßen Rolle, also die Fläche, auf welcher die Glasscheibe aufsteht, aus Quarzglas besteht, ergibt sich der Vorteil, daß der Werkstoff der Rolle, der mit der zu transportierenden Glasscheibe in Berührung kommt, nicht nur den thermischen Belastungen standhält, sondern auch ähnliche Wärmeleiteigenschaften hat wie übliches Flachglas selbst. In diesem Zusammenhang ist darauf hinzuweisen, daß übliches Flachglas einen Silikatanteil von 70 bis 80 %, somit einen Erweichungspunkt von etwa 650°C besitzt, wogegen Quarzglas (100 % Silikat) einen Erweichungspunkt von etwa 1200°C aufweist. Bei der erfindungsgemäßen Rolle treten durch die Berührung Rolle-Glasscheibe keine thermisch bedingten Spannungen in der Glasscheibe mehr auf. Weiters besteht keine Gefahr, daß die Glasscheibe, auch wenn Sie z.B. auf 600°C erhitzt ist, an der erfindungsgemäßen Rolle "klebt".

Weitere Einzelheiten, Vorteile und Merkmale der erfindungsgemäßen Rolle ergeben sich aus der nachstehenden Beschreibung des in den Zeichnungen im Axialschnitt gezeigten Ausführungsbeispieles einer Rolle gemäß der Erfindung.

Eine Rolle 1 für das Transportieren von erhitzten Glasscheiben aus Glas mit einem Anteil von beispielsweise 70 bis 80 % Silikat besteht aus einem Laufring 2 aus Quarzglas (etwa 100 % Silikatanteil), der zwischen zwei an den seitlichen Ringflächen des Laufringes 2 anliegenden Platten 3 angeordnet, insbesondere eingespannt ist. Die Platten 3 können beispielsweise aus Metall bestehen, wobei es sich empfiehlt, zwischen den seitlich am Laufring 2 anliegenden Platten 3 Einlagen 4 aus thermisch isolierendem Werkstoff, wie beispielsweise Steinwolle oder einem hitzebeständigen Kunststoff, wie beispielsweise ein Aramid (Handelsname Kevlar, Hersteller DuPont) vorzusehen.

Um sicherzustellen, daß der Laufring 2 gegenüber den Platten 3 nicht verrutscht, also der Laufring 2 gegenüber der Achse 5 der Rolle 1 exzentrisch wird, kann noch vorgesehen sein, daß an den einander zugekehrten Flächen 6 der beiden Platten 3 innerhalb des Laufringes 2 ringförmige Schultern 7 oder Zentriervorsprünge vorgesehen sind, die den Laufring 2 gegen Verschieben quer zur Achse 5 der Rolle 1 sichern.

Falls gewünscht, können beide Platten 3 oder auch nur eine derselben über die äußere Umfangsfläche 8 des Laufringes 2 überstehen, so daß sich eine Umfangsnut ergibt, in der die Glasscheibe auf der Rolle 1 aufsteht. Diese Ausführungsform ist vorteilhaftt, wenn Glasscheiben, die im wesentlichen lotrecht ausgerichtet sind, transportiert werden sollen.

Insbesondere für das Transportieren von liegenden (horizontal oder schräg) Glasscheiben kann eine Ausführungsform der erfindungsgemäßen Rolle 1 eingesetzt werden, bei welcher der Laufring 2 mit den Umfangsflächen der Platten 3 bündig ist oder gegenüber diesen (radial) nach außen vorsteht.

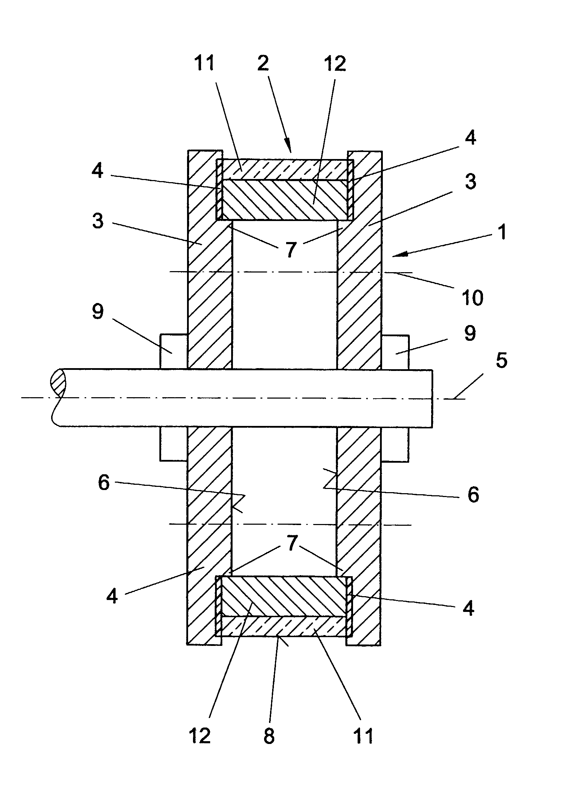

Die Platten 3 werden mit Hilfe von Muttern 9 oder ähnlichen Spannvorrichtungen zusammengehalten und gegen die seitlichen Ringflächen des Laufringes 2 gedrückt. Zusätzlich können Spannschrauben 10 vorgesehen sein, wie dies durch strichpunktierte Linien in der Zeichnung angedeutet ist.

Der Laufring 2 kann zur Gänze aus Quarzglas bestehen, oder er besitzt eine Lauffläche 11 aus Quarzglas, die außerhalb eines Stützringes 12 angeordnet ist.

Im übrigen kann die erfindungsgemäße Rolle 1 als angetriebene oder als freilaufende Rolle ausgebildet sein.

Zusammenfassend kann ein bevorzugtes Ausführungsbeispiel der erfindungsgemäßen Rolle wie folgt beschrieben werden:

Eine Rolle 1 für den Transport von beispielsweise auf eine Temperatur von 600°C erhitzten Glasscheiben besitzt einen Laufring 2, der wenigstens in seinem radial äußeren, die Lauffläche 11 bildenden Bereich aus Quarzglas besteht. Der Laufring 2 ist zwischen zwei Scheiben 3 unter Zwischenlage von Isoliereinlagen 4 eingespannt. Über die Scheiben 3 ist die Rolle 1 auf einer Antriebswelle oder einer Lagerachse gelagert. Dadurch, daß der mit der erhitzten Glasscheibe in Berührung kommende Bereich 11 des Laufringes 2 aus Quarzglas besteht, sind thermische Spannungen in der transportierten Glasscheibe hintangehalten und es besteht keine Gefahr, daß die Glasscheibe an der Rolle 1 "klebt".

## Patentansprüche

1. Rolle für den Transport erhitzter Glasscheiben, dadurch gekennzeichnet, daß die vorzugsweise von einem Laufring (2) gebildete Lauffläche (11) der Rolle (1), auf der die Glasscheibe, die im wesentlichen lotrecht stehend mit ihrem unteren Rand auf der Rolle (1) aufsteht, wenigstens in ihrem äußeren Bereich aus Quarzglas besteht.

2. Rolle nach Anspruch 1, dadurch gekennzeichnet, daß der Laufring (2) zwischen zwei Platten (3) festgelegt ist.

3. Rolle nach Anspruch 2, dadurch gekennzeichnet, daß zwischen dem Laufring (2) und den Platten (3) auf beiden Seiten der seitlichen Ringflächen des Laufringes (2) Isoliereinlagen (4) angeordnet sind.

4. Rolle nach Anspruch 2 oder 3, dadurch gekennzeichnet, daß an den Platten (3) an den einander zugekehrten Seiten (6) derselben Zentriervorsprünge, insbesondere ringförmige Schultern (7) vorgesehen sind, die an der Innenfläche des Laufringes (2) anliegen.

5. Rolle nach einem der Ansprüche 2 bis 4, dadurch gekennzeichnet, daß die Platten (3) oder wenigstens eine derselben einen größeren Durchmesser besitzt als der Laufring (2).

6. Rolle nach einem der Ansprüche 2 bis 5, dadurch gekennzeichnet, daß die Platten (3) durch wenigstens ein Spannmittel (9, 10) gegen den Laufring (2) verspannt sind.

7. Rolle nach Anspruch 6, dadurch gekennzeichnet, daß als Spannmittel auf die Antriebswelle oder die Lagerachse der Rolle (1) aufgesetzte Spannvorrichtungen (9), z.B. Muttern, vorgesehen sind.

8. Rolle nach Anspruch 6, dadurch gekennzeichnet, daß als Spannmittel mehrere im Abstand von der Achse (5) der Rolle (1) angeordnete, die Scheiben (3) durchsetzende Spannschrauben (10) vorgesehen sind.

9. Rolle nach einem der Ansprüche 1 bis 8, dadurch gekennzeichnet, daß der Laufring (2) aus Quarzglas besteht.

10. Rolle nach einem der Ansprüche 1 bis 8, dadurch gekennzeichnet, daß der Laufring (2) aus einer ringförmigen Lauffläche (11) aus Quarzglas und einem innerhalb der Lauffläche (11) angeordneten Stützring (12) besteht.

11. Rolle nach einem der Ansprüche 1 bis 4 und 6 bis 10, dadurch gekennzeichnet, daß die Umfangsfläche des Laufringes (2) von der Achse (5) der Rolle (1) einen größeren Abstand aufweist als die Umfangsfläche der Platten (3).
